# EUROPÄISCHE PATENTSCHRIFT

(11) **EP 4 163 082 B1**
(45) Veröffentlichungstag und Bekanntmachung des Hinweises auf die Patenterteilung: **14.02.2024**
(21) Anmeldenummer: 21201863.4
(22) Anmeldetag: 11.10.2021
(51) Int. Cl.: B29C 48/025, B29C 48/325, B29C 49/04, B29C 48/09, B29C 48/345

(54) **EXTRUSIONSKOPFANORDNUNG**
EXTRUSION HEAD ASSEMBLY
AGENCEMENT DE TÊTE D'EXTRUSION

(43) Veröffentlichungstag der Anmeldung: 12.04.2023
(73) Patentinhaber: W. Müller GmbH, 53842 Troisdorf (DE)
(72) Erfinder: WALTER, Ulrich, 53797 Lohmar (DE)
(74) Vertreter: Neumann Müller Oberwalleney Patentanwälte PartG mbB

(56) Entgegenhaltungen:
- WO-A1-2021/023663
- US-A1- 2014 271 962

## Beschreibung

Die Erfindung betrifft eine Extrusionskopfanordnung mit mehrere entlang einer Querachse nebeneinander angeordnete Extrusionsköpfe, die jeweils ein Gehäuse mit mindestens einem Strömungskanal zum Ausbilden eines Strangs aus extrudierbarem Kunststoff in Richtung einer Längsachse aufweisen. Das Gehäuse weist ein sich entlang der Längsachse erstreckendes Gehäuseaußenteil mit einer Außenumfangsfläche auf, wobei in dem Gehäuseaußenteil eine Längsbohrung parallel zur Längsachse angeordnet ist.

Eine solche Extrusionskopfanordnung ist aus der DE 10 2007 030 677 B4 bekannt. Die Außenumfangsflächen der Gehäuseaußenteile weisen jeweils einen kreisrunden Querschnitt auf. Die Gehäuseaußenteile weisen zudem jeweils eine zentrale Bohrung koaxial zur Längsachse auf, die ebenfalls einen kreisrunden Querschnitt aufweisen und dazu dienen, Gehäuseinnenteile und/oder eine zentrale Pinole aufzunehmen. Zwischen einer Innenumfangsfläche, die die zentrale Bohrung bildet, des jeweiligen Gehäuseaußenteils und einer Außenumfangsfläche des darin eingesetzten Gehäuseinnenteils oder der eingesetzten Pinole ist der Strömungskanal zum Ausbilden eines Strangs aus extrudierbarem Kunststoff gebildet. Die Längsbohrungen parallel zur Längsachse dienen zum Beispiel als Zulauf für extrudierbares Material zum Strömungskanal oder als Rücklauf hiervon. Darüber hinaus kann die Längsbohrung auch andere Funktionen übernehmen, wie zum Beispiel als Bohrung zur Aufnahme einer Spannstange oder ähnliches.

Die Wandstärke des Gehäuseaußenteils ist hierbei so zu bemessen, dass die Längsbohrung darin angeordnet werden kann und zusätzlich das Gehäuseaußenteile im Bereich der Längsbohrung nicht zu sehr geschwächt ist, um Instabilitäten zu vermeiden. Die Durchmesser der in das Gehäuseaußenteil eingesetzten Elemente, wie zum Beispiel Gehäuseinnenteil und/oder Pinole, ergeben sich ebenfalls aus den erforderten Festigkeiten .

Der Abstand zwischen zwei benachbarten Extrusionsköpfen bzw. der Längsachsen zweier benachbarter Extrusionsköpfe zueinander ist daher vornehmlich abhängig von der Wandstärke des Gehäuseaußenteils. Die Wandstärke des Gehäuseaußenteils ist wiederum abhängig von dem Durchmesser der Längsbohrung und der geforderten Stabilität des Gehäuseaußenteils in dem Bereich der Längsbohrung. Hieraus ergibt sich, dass für die übrigen Umfangsbereiche, in denen keine Längsbohrung vorgesehen ist, die Wandstärke des Gehäuseaußenteils überdimensioniert ist.

Weitere Extrusionskopfanordnungen sind aus den Druckschriften US 2014/271962 A1 und WO 2021/023663 A1 bekannt.

Aufgabe der vorliegenden Erfindung ist es, den Abstand zweier nebeneinander angeordneter Extrusionsköpfe zu verringern.

Die Aufgabe wird durch einen Extrusionskopfanordnung mit mehrere entlang einer Querachse nebeneinander angeordnete Extrusionsköpfe gelöst, die jeweils ein Gehäuse mit mindestens einem Strömungskanal zum Ausbilden eines Strangs aus extrudierbarem Kunststoff in Richtung einer Längsachse aufweisen. Das Gehäuse weist ein sich entlang der Längsachse erstreckendes Gehäuseaußenteil mit einer Außenumfangsfläche auf, wobei in dem Gehäuseaußenteil eine Längsbohrung parallel zur Längsachse angeordnet ist. Die Außenumfangsflächen der Gehäuseaußenteile weisen jeweils einen ovalen Querschnitt mit einem größten Durchmesser und einem kleinsten Durchmesser auf. Die Extrusionsköpfe sind mit den kleinsten Durchmessern parallel zur Querachse nebeneinander angeordnet. Die Längsbohrungen sind jeweils auf einem Durchmesser abweichend vom kleinsten Durchmesser angeordnet.

Durch die ovale Ausgestaltung der Außenumfangsfläche kann die Längsbohrung in einem Bereich entfernt vom kleinsten Durchmesser angeordnet werden. Damit kann die Wandstärke im Bereich des kleinsten Durchmessers an die dort zur Einhaltung erforderlicher Stabilitäten minimale Wandstärke angepasst werden. In einem Bereich größerer Wandstärke kann die Längsbohrung vorgesehen werden. Da die Extrusionsköpfe entlang der kleinsten Durchmesser nebeneinander angeordnet sind, kann somit der Abstand zwischen zwei benachbarten Extrusionsköpfen verglichen mit dem Stand der Technik verringert werden.

Die Längsbohrungen können jeweils auf einem Durchmesser angeordnet sein, der mit dem größten Durchmesser einen kleineren Winkel einschließt als mit dem kleinsten Durchmesser. Somit wird sichergestellt, dass die Längsbohrung sich in einem Bereich größerer Wandstärke befindet. Im Extremfall kann die Längsbohrung auf dem größten Durchmesser angeordnet sein.

In einem Ausführungsbeispiel kann vorgesehen sein, dass die Längsbohrungen jeweils einen Durchmesser aufweisen, der größer oder gleich der Wandstärke des Gehäuseaußenteils im Bereich des kleinsten Durchmessers ist. In diesem Ausführungsbeispiel wäre eine Anordnung der Längsbohrung im Bereich des kleinsten Durchmessers aufgrund der geringen Wandstärke überhaupt nicht möglich und muss daher im Bereich der größeren Wandstärken angeordnet werden.

Die Gehäuseaußenteile können jeweils eine zentrale Bohrung mit kreisrunden Querschnitt aufweisen, die dazu dienen können, ein Gehäuseinnenteil und/oder eine zentrale Pinole aufzunehmen, wobei zwischen diesen Elementen und einer Innenumfangsfläche der Gehäuseaußenteile jeweils der Strömungskanal zum Ausbilden eines Strangs aus extrudierbarem Kunststoff gebildet ist.

Das Gehäuseaußenteil kann auch mehrere Gehäuseinnenteile und/oder eine Pinole aufnehmen, je nachdem, aus wie vielen Schichten der Strang aus extrudierbarem Kunststoff hergestellt werden soll.

Um die Gehäuseaußenteile kann jeweils ein Heizelement angeordnet sein, das an der Außenumfangsfläche anliegt. Durch die ovale und damit abgerundete Querschnittsform der Außenumfangsflächen lassen sich Heizelemente einfach auf die jeweilige Außenumfangsfläche verspannen, ohne dass Luftspalte zwischen den Heizelementen und den Gehäuseaußenteilen entstehen. Zudem wird durch die ovale Querschnittsform ein homogener Wärmeeintrag in das Gehäuse und in den zumindest einen Strömungskanal gewährleistet.

Ein Ausführungsbeispiel wird im Folgenden mit Bezug auf die Figuren näher erläutert. Hierin zeigen:
- Figur 1: eine perspektivische Ansicht einer Extrusionskopfanordnung,
- Figur 2: einen Querschnitt der Extrusionskopfanordnung gemäß Figur 1 durch beide dargestellten Extrusionsköpfe und
- Figur 3: einen Querschnitt durch die Extrusionskopfanordnung entlang der Schnittlinie III-III gemäß Figur 2.

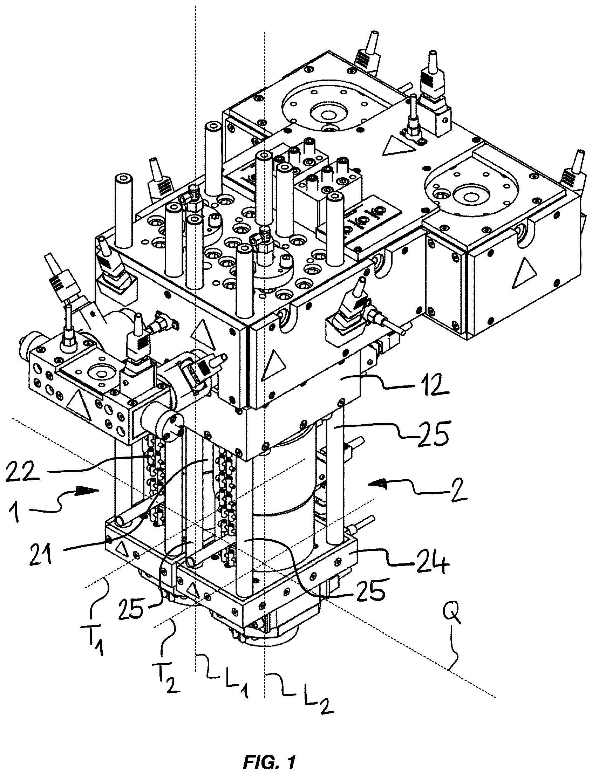

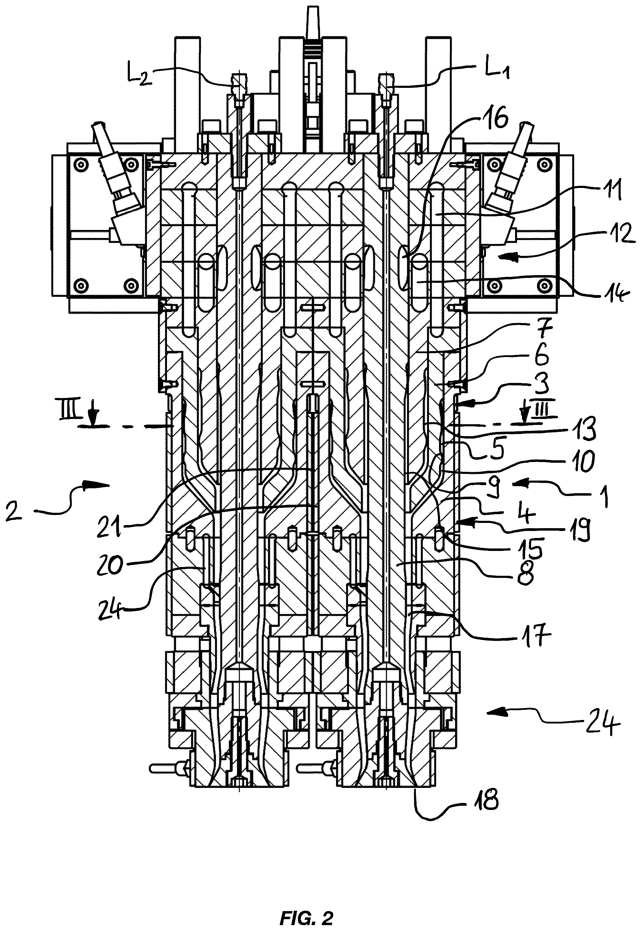

Die Figuren 1 bis 3 zeigen ein Ausführungsbeispiel einer Extrusionskopfanordnung in unterschiedlichen Darstellungen, wobei im Folgenden die Figuren 1 bis 3 zusammen beschrieben werden.

Die Extrusionskopfanordnung umfasst einen ersten Extrusionskopf 1 und einen zweiten Extrusionskopf 2, die entlang einer Querachse Q nebeneinander angeordnet sind. Der erste Extrusionskopf 1 erstreckt sich im Wesentlichen entlang einer ersten Längsachse L₁ und der zweite Extrusionskopf 2 entlang einer zweiten Längsachse L₂. Im Folgenden wird repräsentativ für beide Extrusionsköpfe 1, 2 der erste Extrusionskopf 1 näher erläutert.

Der erste Extrusionskopf 1 weist ein Gehäuse 3 auf, in dem ein äußerer Strömungskanal 5 koaxial zur ersten Längsachse L₁ angeordnet ist. Hierzu weist das Gehäuse 3 ein Gehäuseaußenteil 4 auf, dass ein erstes Gehäuseinnenteil 6, ein zweites Gehäuseinnenteil 7 und eine zentrale Pinole 8 aufnimmt. Das Gehäuseaußenteile 4, das erste Gehäuseinnenteil 6, das zweite Gehäuseinnenteil 7 und die zentrale Pinole 8 sind koaxial zur ersten Längsachse L₁ angeordnet.

Das Gehäuseaußenteil 4 weist eine zentrale Bohrung 9 auf, in die das erste Gehäuseinnenteil 6 eingesetzt ist. Zwischen einer Außenumfangsfläche 10 des ersten Gehäuseinnenteils 6 und einer von der zentralen Bohrung 9 des Gehäuseaußenteils 4 gebildeten Innenfläche ist der äußere Strömungskanal 5 in Form eines Ringkanals gebildet. Der äußere Strömungskanal 5 wird von Anschlusskanälen 11 eines Verteilers 12 mit plastifizierbarem Kunststoff gespeist, wobei die Anschlusskanäle 11 mit einem hier nicht dargestellten ersten Extruder verbunden sind.

In derselben Art und Weise nimmt das erste Gehäuseinnenteil 6 das zweite Gehäuseinnenteil 7 auf, wobei zwischen dem ersten Gehäuseinnenteil 6 und dem zweiten Gehäuseinnenteil 7 ein mittlerer Strömungskanal 13 gebildet ist, der von Anschlusskanälen 14 des Verteilers 12 gespeist ist und mit einem zweiten hier nicht dargestellten zweiten Extruder verbunden ist.

Schließlich nimmt das zweite Gehäuseinnenteil 7 die Pinole 8 auf, wobei zwischen dem zweiten Gehäuseinnenteil 7 und der Pinole 8 ein innerer Strömungskanal 15 gebildet ist, der über Anschlusskanäle 16 des Verteilers 12 zur Versorgung mit plastifizierbarem Kunststoff mit einem hier nicht dargestellten dritten Extruder verbunden ist.

Der äußere Strömungskanal 5, der mittlere Strömungskanal 13 und der innere Strömungskanal 15 münden in einen gemeinsamen Strömungskanal 17, der zu einer Ringspaltdüse 18 führt, aus der schließlich ein Schlauch aus extrudierbarem Kunststoff austritt. Hierbei kann die zentrale Pinole 8 entlang der ersten Längsachse L₁ verstellt werden, wodurch die Ringspaltdüse 18 geöffnet und geschlossen werden kann. Der äußere Strömungskanal 5 dient zur Bildung einer äußeren Schicht, der mittlere Strömungskanal 13 zur Bildung einer mittleren Schicht und der innere Strömungskanal 15 zur Bildung einer inneren Schicht des Schlauchs.

Grundsätzlich ist es auch denkbar, dass nur ein Strömungskanal vorgesehen ist oder eine Anzahl von Strömungskanälen, die von den gezeigten drei Strömungskanälen 5, 13, 15 abweicht.

Wie dem Fachmann bekannt ist, wird in den genannten Extrudern das Kunststoffmaterial durch Erwärmen und Kneten plastifiziert bevor es den Extrusionsköpfen 1, 2 zugeführt wird. Um den plastifizierten Zustand des Kunststoffmaterial beizubehalten, ist um das Gehäuse 3, insbesondere um das Gehäuseaußenteile 4, einer Heizanordnung 19 angeordnet, die in Anlage zu einer Außenumfangsfläche 20 des Gehäuseaußenteils 4 ist. Die Heizanordnung 19 umfasst ein Heizelement 21, das um das Gehäuseaußenteile 4 in Anlage zur Außenumfangsfläche 20 angeordnet ist und mittels einer Spannanordnung 22 gegen diese verspannt ist.

In dem Gehäuseaußenteil 4 ist eine Längsbohrung 23 angeordnet, die parallel zur ersten Längsachse L₁ verläuft. Über die Längsbohrung 23 wird ein Zuführkanal 24 für eine Außenbeschichtung des zu extrudierenden Schlauchs gespeist.

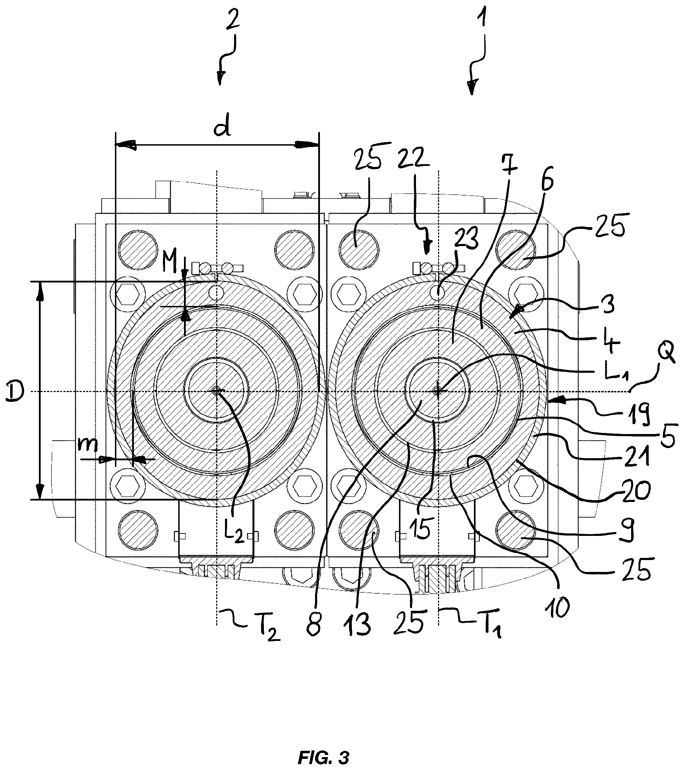

Die Außenumfangsfläche 20 des Gehäuseaußenteils 4 ist oval gestaltet mit einem kleinsten Durchmesser d in Richtung der Querachse Q und einen größten Durchmesser D in Richtung einer ersten Tiefenachse T₁, die rechtwinklig zur Querachse Q angeordnet ist. In Figur 3 sind der kleinste Durchmesser d und der größte Durchmesser D der Übersichtlichkeit halber am zweiten Extrusionskopf 2 eingezeichnet, wobei anzumerken ist, dass der erste Extrusionskopf 1 identisch zum zweiten Extrusionskopf 2 ausgebildet ist.

Die zentrale Bohrung 9 des Gehäuseaußenteils 4 ist kreiszylindrisch ausgebildet, wobei die zentrale Bohrung 9 und die Außenumfangsfläche 20 koaxial zur ersten Längsachse L₁ angeordnet sind. Dadurch ergibt sich in Richtung der ersten Tiefenachse T₁ eine größere Wandstärke M des Gehäuseaußenteils 4 als in Richtung der Querachse Q mit einer kleineren Wandstärke m. Die Wandstärke m in Richtung der Querachse Q kann derart ausgewählt sein, dass sie an die minimalen Stabilitätserfordernisse für das Gehäuseaußenteil 4 angepasst sind. Im Bereich der Längsbohrung 23 ist zur Erhaltung der Stabilität eine größere Wanddicke M erforderlich, was dadurch erzielt wird, dass die ovale Außenumfangsfläche 20 in diese Richtung den größten Durchmesser D aufweist. Dadurch kann die Längsbohrung 23 in diesem Bereich ohne Stabilitätseinbuße aufgenommen werden. Die Längsbohrung 23 hat im vorliegenden Ausführungsbeispiel einen Durchmesser, der in etwa der kleineren Wanddicke m entspricht.

Es ist auch denkbar, dass die Längsbohrung 23 nicht direkt auf der ersten Tiefenachse T₁ angeordnet ist, sondern in Umfangsrichtung um die erste Längsachse L₁ seitlich versetzt zu dieser. Sie ist jedoch nicht im Bereich der Querachse Q anzuordnen, um in diesem Bereich nicht eine größere Wandstärke erforderlich zu machen.

Durch die geringe Wandstärke m im Bereich der Querachse Q können die Extrusionsköpfe 1, 2 näher zueinander angeordnet werden als im Stand der Technik, in dem die Außenumfangsfläche kreiszylindrisch ausgebildet ist, sodass die große Materialstärke M über den gesamten Umfang vorhanden ist.

Das Gehäuseaußenteile 4, das erste Gehäuseinnenteil 6 und das zweite Gehäuseinnenteil 7 bilden zusammen einen mittleren Gehäuseabschnitt, der sich zwischen dem Verteiler 12 und einem Düsenabschnitt 24 erstreckt. Im Querschnitt quer zur ersten Längsachse L₁ weist der mittlere Gehäuseabschnitt die Außenkontur des Gehäuseaußenteils 4 auf, ist also ovalförmig gestaltet. Der Verteiler 12 und der Düsenabschnitt 24 sind im Querschnitt rechteckig gestaltet und ragen teilweise über den Außenumfang des mittleren Gehäuseabschnitts radial vor. Zu Befestigungszwecken sind vier Spannstangen 25, bezogen auf die erste Längsachse L₁, über dem Umfang verteilt angeordnet, die den Verteiler 12 und den Düsenabschnitt 24 axial zueinander halten und zwischen diesen den mittleren Gehäuseabschnitt aufnehmen. Aufgrund der ovalen bzw. runden Gestaltung der Außenkontur des mittleren Gehäuseabschnitts können die Spannstangen 25 in Richtung der ersten Tiefenachse T₁ betrachtet überlappend mit dem mittleren Gehäuseabschnitt angeordnet sein, sodass die Spannstangen 25 bei der Anordnung mehrerer Extrusionsköpfe 1, 2 nebeneinander nicht mit Bauteilen eines benachbarten Extrusionskopfs kollidieren.

### Bezugszeichenliste

- 1: erster Extrusionskopf
- 2: zweiter Extrusionskopf
- 3: Gehäuse
- 4: Gehäuseaußenteil
- 5: äußerer Strömungskanal
- 6: erstes Gehäuseinnenteil
- 7: zweites Gehäuseinnenteil
- 8: zentrale Pinole
- 9: zentrale Bohrung
- 10: Außenumfangsfläche
- 11: Anschlusskanal
- 12: Verteiler
- 13: mittlerer Strömungskanal
- 14: Anschlusskanal
- 15: innerer Strömungskanal
- 16: Anschlusskanal
- 17: gemeinsamer Strömungskanal
- 18: Ringspaltdüse
- 19: Heizanordnung
- 20: Außenumfangsfläche
- 21: Heizelement
- 22: Spannanordnung
- 23: Längsbohrung
- 24: Düsenabschnitt

- L₁: erste Längsachse
- L₂: zweite Längsachse
- Q: Querachse
- T₁: erste Tiefenachse
- T₂: zweite Tiefenachse
- d: kleinster Durchmesser
- D: größter Durchmesser
- m: kleine Wandstärke
- M: große Wandstärke

## Patentansprüche

1. Extrusionskopfanordnung mit mehrere entlang einer Querachse (Q) nebeneinander angeordnete Extrusionsköpfe (1, 2), die jeweils ein Gehäuse (3) mit mindestens einem Strömungskanal (5, 13, 15) zum Ausbilden eines Strangs aus extrudierbarem Kunststoff in Richtung einer Längsachse (L₁, L₂) aufweisen,
wobei das Gehäuse (3) ein sich entlang der Längsachse (L₁, L₂) erstreckendes Gehäuseaußenteil (4) mit einer Außenumfangsfläche (20) aufweist, und wobei in dem Gehäuseaußenteil (4) eine Längsbohrung (23) parallel zur Längsachse (L₁, L₂) angeordnet ist,
**dadurch gekennzeichnet,**
**dass** jeweils die Außenumfangsfläche (20) des Gehäuseaußenteils (4) einen ovalen Querschnitt mit einem größten Durchmesser (D) und einem kleinsten Durchmesser (d) aufweist,
**dass** die Extrusionsköpfe (1, 2) mit den kleinsten Durchmessern (d) parallel zur Querachse (Q) nebeneinander angeordnet sind und
**dass** die Längsbohrungen (23) jeweils auf einem Durchmesser abweichend vom kleinsten Durchmesser (d) angeordnet sind.

2. Extrusionskopfanordnung nach Anspruch 1,
**dadurch gekennzeichnet,**
**dass** die Längsbohrungen (23) jeweils auf einem Durchmesser angeordnet sind, der zum größten Durchmesser (D) einen kleineren Winkel einschließt als zum kleinsten Durchmesser (d).

3. Extrusionskopfanordnung nach Anspruch 1 oder 2,
**dadurch gekennzeichnet,**
**dass** die Längsbohrungen (23) jeweils auf dem größten Durchmesser (D) angeordnet sind.

4. Extrusionskopfanordnung nach einem der Ansprüche 1 bis 3,
**dadurch gekennzeichnet,**
**dass** die Längsbohrungen (23) jeweils einen Durchmesser aufweisen, der größer oder gleich der Wandstärke (m) des Gehäuseaußenteils (4) im Bereich des kleinsten Durchmessers (d) ist.

5. Extrusionskopfanordnung nach einem der Ansprüche 1 bis 4,
**dadurch gekennzeichnet,**
**dass** die Gehäuseaußenteile (4) jeweils eine zentrale Bohrung (9) mit kreisrundem Querschnitt aufweisen.

6. Extrusionskopfanordnung nach einem der Ansprüche 1 bis 5,
**dadurch gekennzeichnet,**
**dass** um die Gehäuseaußenteile (4) jeweils ein Heizelement (21) angeordnet ist, das an der Außenumfangsfläche (20) anliegt.

## Claims

1. Extrusion head arrangement having a plurality of extrusion heads (1, 2) arranged next to one another along a transverse axis (Q), each extrusion head having a housing (3) with at least one flow channel (5, 13, 15) for forming a strand of extrudable plastic in the direction of a longitudinal axis (L1, L2), wherein the housing (3) has an outer housing part (4) extending along the longitudinal axis (L1, L2) with an outer circumferential surface (20), and wherein a longitudinal bore (23) parallel to the longitudinal axis (L1, L2) is arranged in the outer housing part (4),
**characterized in**
**that** the outer circumferential surface (20) of the outer housing part (4) has an oval cross-section with a largest diameter (D) and a smallest diameter (d), that the extrusion heads (1, 2) are arranged next to one another with the smallest diameters (d) parallel to the transverse axis (Q), and
**that** the longitudinal bores (23) are each arranged on a diameter deviating from the smallest diameter (d).

2. Extrusion head arrangement according to claim 1,
**characterized in**
**that** the longitudinal bores (23) are each arranged on a diameter which forms a smaller angle to the largest diameter (D) than to the smallest diameter (d).

3. Extrusion head arrangement according to claim 1 or 2,
**characterized in**
**that** the longitudinal bores (23) are each arranged on the largest diameter (D).

4. Extrusion head arrangement according to any one of claims 1 to 3,
**characterized in**
**that** the longitudinal bores (23) each have a diameter which is greater than or equal to the wall thickness (m) of the outer housing part (4) in the area of the smallest diameter (d).

5. Extrusion head arrangement according to any one of claims 1 to 4,
**characterized in**
**that** the outer housing parts (4) each have a central bore (9) with a circular cross-section.

6. Extrusion head arrangement according to any one of claims 1 to 5,
**characterized in**
**that** a heating element (21) is arranged around each of the outer housing parts (4) and contacts the outer circumferential surface (20).

## Revendications

1. Agencement de tête d'extrusion avec plusieurs têtes d'extrusion (1, 2) disposées les unes à côté des autres le long d'un axe transversal (Q), qui comportent respectivement un boîtier (3) avec au moins un conduit d'écoulement (5, 13, 15) pour constituer un cordon de matière plastique extrudable en direction d'un axe longitudinal (L₁, L₂),
sachant que le boîtier (3) comporte une partie extérieure de boîtier (4) s'étendant le long de l'axe longitudinal (L₁, L₂) avec une surface périphérique extérieure (20), et
sachant que dans la partie extérieure de boîtier (4) est disposé un alésage longitudinal (23) parallèlement à l'axe longitudinal (L₁, L₂),
**caractérisé en ce que**
la surface périphérique extérieure (20) de la partie extérieure de boîtier (4) comporte respectivement une section ovale avec un diamètre (D) le plus grand et un diamètre le plus petit (d),
**en ce que** les têtes d'extrusion (1, 2) sont disposées les unes à côté des autres avec les diamètres minimaux (d) parallèlement à l'axe transversal (Q), et
**en ce que** les alésages longitudinaux (23) sont disposés respectivement sur un diamètre s'écartant du diamètre le plus petit(d).

2. Agencement de tête d'extrusion selon la revendication 1,
**caractérisé en ce que**
les alésages longitudinaux (23) sont disposés respectivement sur un diamètre qui forme, par rapport au diamètre le plus gros (D), un angle plus petit que par rapport au diamètre le plus petit (d).

3. Agencement de tête d'extrusion selon la revendication 1 ou 2,
**caractérisé en ce que**
les alésages longitudinaux (23) sont disposés respectivement sur le diamètre le plus grand (D).

4. Agencement de tête d'extrusion selon l'une quelconque des revendications 1 à 3,
**caractérisé en ce que**
les alésages longitudinaux (23) comportent respectivement un diamètre, qui est plus grand ou égal à l'épaisseur de paroi (m) de la partie extérieur de boîtier (4) dans la zone du diamètre le plus petit (d).

5. Agencement de tête d'extrusion selon l'une quelconque des revendications 1 à 4,
**caractérisé en ce que**
les parties extérieures du boîtier (4) comportent respectivement un alésage central (9) avec section circulaire.

6. Agencement de tête d'extrusion selon l'une quelconque des revendications 1 à 5,
**caractérisé en ce que**
un élément chauffant (21) est respectivement disposé autour des parties extérieures du boîtier (4), qui vient s'appliquer à la surface périphérique extérieure (20).
